# EUROPÄISCHE PATENTSCHRIFT

(11) **EP 1 367 925 B1**
(45) Veröffentlichungstag und Bekanntmachung des Hinweises auf die Patenterteilung: **04.04.2007**
(21) Anmeldenummer: 02700092.6
(22) Anmeldetag: 04.03.2002
(51) Int. Cl.: A47J 31/40

(54) **KAFFEEMASCHINE**
COFFEE MACHINE
CAFETIERE

(30) Priorität: 07.03.2001 CH 425012001
(43) Veröffentlichungstag der Anmeldung: 10.12.2003
(73) Patentinhaber: ETNA Vending Technologies b.v., 7131 PB Lichtenvoorde (NL)
(72) Erfinder: RUCKSTUHL, Stephan, CH-4623 Neuendorf (CH)
(74) Vertreter: Jilderda, Anne Ayolt
(86) Internationale Anmeldenummer: PCT/CH2002/000130
(87) Internationale Veröffentlichungsnummer: WO 2002/069769

(56) Entgegenhaltungen:
- EP-A- 0 202 517
- EP-A- 0 486 434
- EP-A- 0 486 435
- CH-A- 682 798
- US-A- 5 479 848

## Beschreibung

### TECHNISCHES GEBIET

Die vorliegende Erfindung bezieht sich auf das Gebiet der automatisierten Zubereitung von Kaffee. Sie betrifft eine Kaffeemaschine gemäss dem Oberbegriff des Anspruchs 1.

Eine solche Kaffeemaschine ist z.B. aus der Druckschrift WO-A1-93/19655 bekannt.

Eine weitere Kaffeemaschine ist bekannt aus der EP 0 202 517 A1, und wird als nächstliegender Stand der Technik betrachtet.

### STAND DER TECHNIK

Bei der automatischen Zubereitung von Kaffee mittels Kaffeemaschinen bzw. Kaffeeautomaten, bei denen der bohnenförmige Kaffee zunächst in einem der Maschine untergebrachten Mahlwerk gemahlen wird, das gemahlene Kaffeepulver dann in eine Brühkammer eingebracht und dort zusammengepresst wird, dann heisses Wasser unter Druck durch die Brühkammer geleitet wird, und schliesslich nach Beendigung des Brühvorgangs der verbleibende Filterkuchen aus der Brühkammer ausgestossen und in einem Auffangbehälter ausgeworfen wird, ist es wünschenswert, trotz der zu realisierenden komplexen Zubereitungsschritte die Maschine so auszugestalten, dass sie einfach aufgebaut ist, über möglichst lange Zeiträume störungs- und wartungsfrei funktioniert, und leicht zu reinigen und zu warten ist.

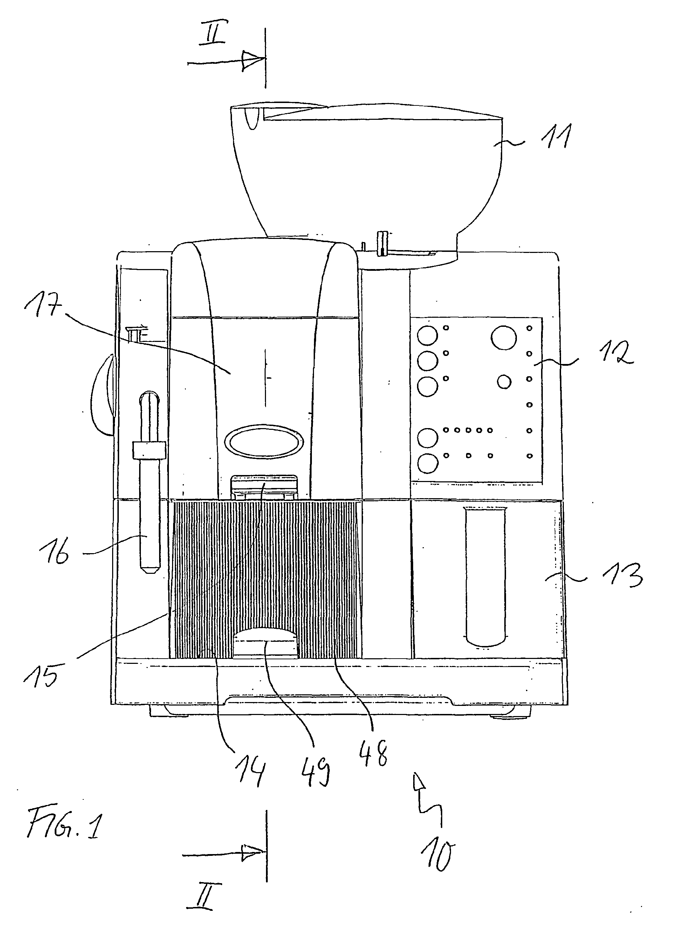

In der eingangs genannten Druckschrift WO-A1-93/19655 ist nun eine Kaffeemaschine vorgeschlagen worden, deren Herzstück eine herausnehmbare Brüheinheit (1 in Fig. 1-3) ist. In dieser Brüheinheit sind entlang einer Hauptachse verfahrbar ein Boden und ein Verdichtungskolben angeordnet, die unterschiedliche, aufeinander abgestimmte Bewegungsabläufe durchlaufen. Diese Bewegungsabläufe sind so ausgelegt, dass in eine Füllkammer eingefülltes gemahlenes Kaffeepulver in eine benachbarte Brühkammer transportiert und dort zwischen Boden und Verdichtungskolben komprimiert wird. Der zylindrische Pulverpressling wird dann in radialer Richtung von unter Druck stehendem heissen Wasser durchströmt. Der entstehende gebrühte Kaffee wird radial aus der Brühkammer ausgelassen und nach unten ausgegeben. Nach Beendigung des Brühvorgangs wird der verbleibende Filterkuchen in Achsenrichtung aus der Brühkammer ausgeschoben und mittels eines Auswerfers quer zur Hauptachse ausgeworfen. Die unterschiedlichen Bewegungsabläufe des Bodens, des Verdichtungskolbens und des Auswerfers werden von einem gemeinsamen Antriebsaggregat über eine spezielle Mechanik bewirkt, die unter anderem zwei über ein Zahnrad in Eingriff stehende parallele Zahnstangen umfasst. Zur Erläuterung der Wirkungsweise im einzelnen wird auf die genannte Druckschrift verwiesen.

Wie aus den Figuren 1 und 4 der Druckschrift WO-A1-93/19655 und der Beschreibung auf S. 4, letzter Absatz zu entnehmen ist, ist die Brüheinheit mit ihrer Hauptachse, die der Bewegungsrichtung des Verdichtungskolbens entspricht, quer in der Kaffeemaschine eingebaut, d.h., die Hauptachse verläuft parallel zur Frontseite der Maschine. Diese Anordnung hat jedoch verschiedene Nachteile: Bedingt durch die verschiebbare Anordnung des Bodens und des Kolbens sowie die Anordnung der Füllkammer, der Brühkammer und des Auswerfbereiches längs der Hauptachse erreicht die Brüheinheit in Richtung der Hauptachse eine relativ grosse Länge, die beim beschriebenen Quereinbau als Breite wirksam wird. Weil neben der Brüheinheit weiteren Funktionseinheiten wie Mahlwerk, Antriebseinheit, Wassererhitzungseinheit, Wasservorratsgefäss, Auffangbehälter für die Filterkuchen, Steuerelektronik etc. in der Maschine untergebracht werden und- zumindest teilweise - möglichst auch von vorne zugänglich sein müssen, ergibt sich für die Maschine insgesamt eine vergleichsweise grosse Breite, die nicht immer wünschenswert ist.

Grundsätzlich wäre es denkbar, die quer eingebaute Brüheinheit von der Seite einschiebbar auszubilden. Dies würde jedoch in der Praxis bedeuten, das neben der Maschine stets ausreichend Platz frei bleiben muss, damit die Brüheinheit ungehindert eingeschoben oder herausgezogen werden kann. Es ist daher üblich, die quer eingebaute Brüheinheit direkt quer von vorne einzusetzen bzw. nach vorne herauszunehmen. Dies hat jedoch zur Folge, dass in der Maschine der Platz vor der Brüheinheit über die gesamte Breite der Brüheinheit frei bleiben muss.

Ein weiteres Problem besteht bei der Kopplung der herausgenommenen und (z.B. nach einer Reinigung) wieder eingesetzten Brüheinheit mit der in der Maschine verbleibenden Antriebseinheit. Wenn nämlich die beweglichen Elemente (Boden, Verdichtungskolben etc.) der Brüheinheit beim Einsetzen andere Positionen einnehmen, als beim Herausnehmen, verschiebt sich auch der Eingriffspunkt für die Kopplung. Ein Nachfahren der Antriebseinheit auf den neuen Eingriffspunkt gestaltet sich beim Quereinbau der Brüheinheit jedoch schwierig.

Nachteile durch den Quereinbau ergeben sich aber auch hinsichtlich der Wasserführung: Um eine Abkühlung des aufgebrühten Kaffees beim Weg von der Brühkammer zum Auslass möglichst gering zu halten, muss dieser Weg so kurz wie möglich gehalten werden. Dies bedeutet jedoch ein radiales Durchströmen der Brühkammer, wodurch sich vergleichsweise hohe Strömungswiderstände ergeben.

### DARSTELLUNG DER ERFINDUNG

Es ist daher Aufgabe der Erfindung, eine automatisch arbeitende Kaffeemaschine mit einer kompakten Brüheinheit zu schaffen, welche die Nachteile bekannter Kaffeemaschinen vermeidet und sich insbesondere durch einen vereinfachten und platzsparenden Aufbau sowie eine erleichterte Zugänglichkeit für Reinigungs- und Wartungszwecke auszeichnet.

Die Aufgabe wird durch die Gesamtheit der Merkmale des Anspruchs 1 gelöst. Der Kern der Erfindung besteht darin, die Brüheinheit mit der Hauptachse parallel zur Einschubrichtung von vorne nach hinten in die Kaffeemaschine einschiebbar auszubilden. Hierdurch beansprucht die Brüheinheit nur eine geringe Breite der Maschine sowohl innerhalb der Maschine als auch beim Ein- und Ausbau. Darüber hinaus ermöglicht des er Längseinschub, unter der Brüheinheit geeignete Auffangbehälter anzuordnen, die sich über die gesamte Länge der Brüheinheit erstrecken und so einen Schutz vor Leckagen in der Brüheinheit bieten.

Eine erste bevorzugte Ausgestaltung der Erfindung zeichnet sich dadurch aus, dass zum Führen der Brüheinheit beim Einschieben in die bzw. Herausziehen aus der Kaffeemaschine eine oder mehrere parallel zur Hauptachse der Brüheinheit verlaufende, vorzugsweise stangenförmige, Führungen vorgesehen sind, und dass am vorderen Ende der Führung eine Verriegelung zum Verriegeln der eingeschobenen Brüheinheit vorgesehen ist. Die Führung erleichtert das positionsgenaue Einschieben der Brüheinheit und sichert so auf einfache Weise die für eine einwandfreie Funktion notwendigen mechanischen und hydraulischen Verbindungen zwischen Brüheinheit und der Maschine.

Eine zweite bevorzugte Ausgestaltung der erfindungsgemässen Kaffeemaschine ist dadurch gekennzeichnet, dass in der Brüheinheit das unter Druck stehende heisse Wasser durch das in der Brühkammer befindliche Kaffeepulver in Richtung der Hauptachse von hinten nach vorne gepresst wird und durch einen am vorderen Ende der Brüheinheit angeordneten, vorzugseise höhenverstellbaren Auslass austritt, und dass der Hubboden und der Presskolben an ihren der Brühkammer zugewandten Stirnseiten jeweils mit einer Siebplatte ausgestattet sind, durch welche das heisse Wasser in die Brühkammer eintritt bzw. der aufgebrühte Kaffee die Brühkammer verlässt. Hierdurch lassen sich bei der erfindungsgemässen Längskonfiguration der Brüheinheit bei verbessertem Durchsatz des Kaffeepulvers vorteilhaft kurze Wege für die Flüssigkeit erreichen, die der Qualität des aufgebrühten Kaffees zugute kommen.

Eine andere bevorzugte Ausgestaltung der Erfindung zeichnet sich dadurch aus, dass der Antrieb des Hubbodens und des Presskolbens über einen in der Brüheinheit in Richtung der Hauptachse verschiebbar angeordneten Antriebsschlitten erfolgt, welcher mit einem Mitnehmer lösbar in Eingriff steht, der auf einer parallel zur Hauptachse liegenden Gewindestange sitzt und durch Drehen der Gewindestange entlang der Hauptachse verfahrbar ist, und dass lösbare Eingriff zwischen dem Mitnehmer und dem Antriebsschlitten durch einen Einrasthaken bewirkt wird, welcher sich in Richtung der Hauptachse erstreckt und um eine quer zur Hauptachse liegende Schwenkachse verschwenkbar am Mitnehmer angeordnet ist. Hierdurch kann der Eingriff zwischen dem angetriebenen Mitnehmer und der eingeschobenen Brüheinheit leicht und automatisch wiederhergestellt werden, auch wenn die Eingriffsposition sich in der Zwischenzeit verändert haben sollte.

Eine besonders einfache Steuerung der Verdichtung des Kaffeepulvers lässt sich erreichen, wenn dabei die Gewindestange in Richtung der Hauptachse gegen den Druck eines Federelements, vorzugsweise eines Federpakets, verschiebbar gelagert ist, und wenn die Verschiebung der Gewindestange gegen den Druck des Federelements bzw. Federpakets um einen vorbestimmten Verschiebungsweg, wie er sich beim Auftreffen des Mitnehmers, des Antriebsschlittens oder des Presskolbens auf einen Widerstand ergibt, zum Steuern bzw. Schalten des Antriebs eingesetzt wird.

Ein Ausgleich der beim Befeuchten des Kaffeepulvers auftretenden Dichteänderung und damit die Sicherung eines optimalen Brühvorgangs lässt sich erreichen, wenn der Presskolben über einen in Richtung der Hauptachse verschiebbaren Kolbenantrieb bewegt wird, und der Presskolben mit dem Kolbenantrieb über in Richtung der Hauptachse wirkende Druckfedern in Wirkverbindung steht.

Bevorzugt wird das unter Druck stehende heisse Wasser durch den Presskolben in die Brühkammer geleitet, und am Presskolben ist ein Ventilmechanismus angeordnet, welcher geschlossen ist, wenn der Presskolben mit einem vorgegebenen Druck auf das in der Brühkammer befindliche Kaffeepulver drückt, und das unter Druck stehende Wasser entspannt und nach aussen ablässt, wenn der Druck des Presskolbens auf das Kaffeepulver beseitigt wird. Insbesondere wird dies dadurch verwirklicht, dass der Ventilmechanismus am Kolbenantrieb angeordnete Ventilstössel umfasst, welche bei ausreichendem Zusammendrücken der Druckfedern dichtend in entsprechende Ventilbohrungen im Presskolben einfahren, die mit einer Zuführleitung für das heisse Wasser in Verbindung stehen. Vorzugsweise kann die Zuführleitung für das heisse Wasser direkt durch einen der Ventilstössel verlaufen, und die Ventilbohrungen können über eine Siebplatte mit der Brühkammer in Verbindung stehen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: eine Gesamtansicht von vorne einer Kaffeemaschine gemäss einem bevorzugten Ausführungsbeispiel der Erfindung im geschlossenen Zustand;
- Fig. 2: einen Querschnitt durch die Maschine aus Fig. 1 entlang der Ebene II-II;
- Fig. 3: einen vertikalen Längsschnitt durch die Brüheinheit der Maschine aus Fig. 2;
- Fig. 4: einen horizontalen Längsschnitt durch die Brüheinheit der Maschine aus Fig. 2;
- Fig. 5: in perspektivischer Darstellung den Presskolben aus Fig. 4 von hinten und von vorne gesehen;
- Fig. 6: den Längsschnitt durch den Presskolben aus Fig. 5 in einer durch die Ventilbohrungen gehenden Ebene; und
- Fig.7: den Längsschnitt durch den Presskolben aus Fig. 5 in einer durch die Federzapfen gehenden Ebene.

### WEGE ZUR AUSFÜHRUNG DER ERFINDUNG

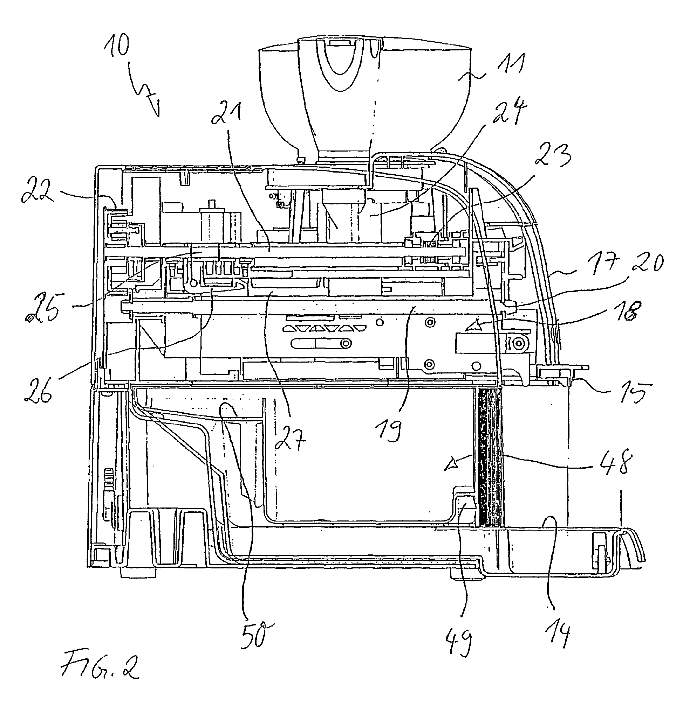

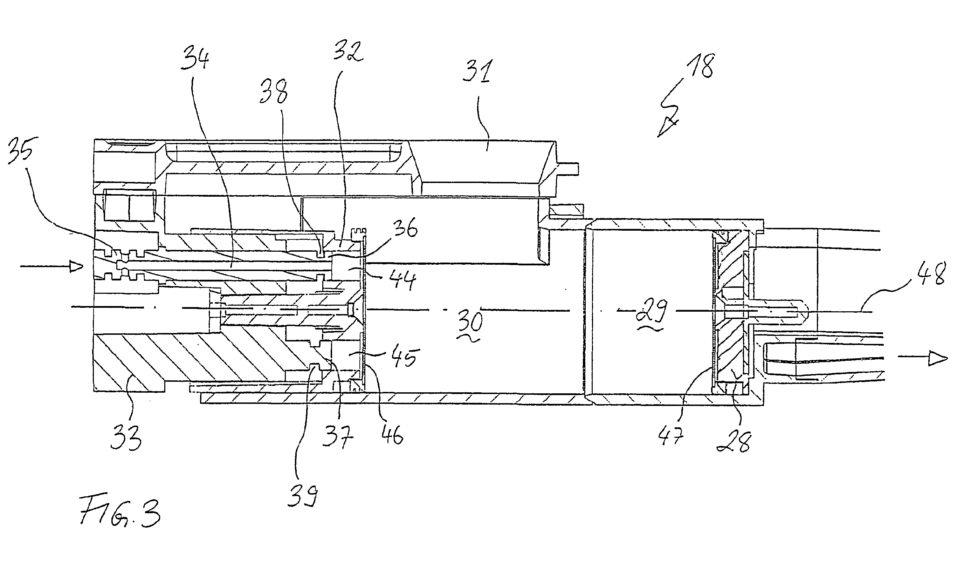

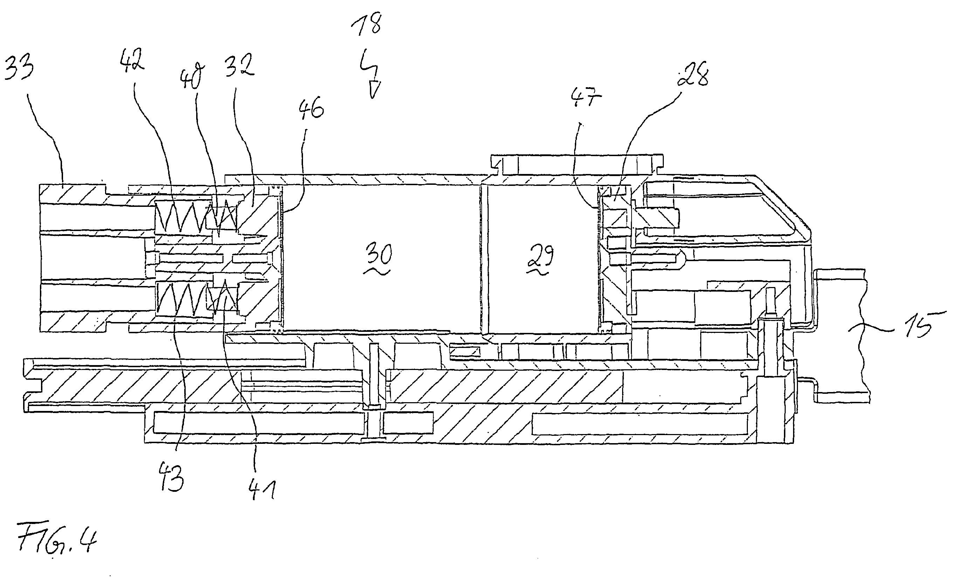

In Fig. 1 ist in einer Gesamtansicht von vorne eine Kaffeemaschine gemäss einem bevorzugten Ausführungsbeispiel der Erfindung im geschlossenen Zustand dargestellt. Fig. 2 zeigt einen Querschnitt durch die Maschine aus Fig. 1 entlang der Ebene II-II. Die Kaffeemaschine 10 hat auf der Oberseite einen Einfülltrichter 11 für die zu mahlenden Kaffeebohnen. Unterhalb des Einfülltrichters 11 ist ein zugehöriges Mahlwerk 24 angeordnet. Der im Mahlwerk 24 gemahlene Kaffee fällt in eine kompakte Brüheinheit 18 und wird dort in einer Brühkammer (29 in Fig. 3, 4) verdichtet. Durch den Pulverpressling wird dann unter Druck stehendes heisses Wasser gedrückt. Der resultierende aufgebrühte Kaffee tritt über ein fderbelstetes Cremaventil aus der Brühkammer aus und wird über einen nach vorne aus der Kaffeemaschine 10 herausragenden, vorzugsweise in der Höhe verstellbaren (verschwenkbaren) Auslass 15 beispielsweise in eine Tasse abgefüllt, die auf einer unterhalb des Auslasses 15 angeordneten Stellfläche 14 steht. Zum Aufschäumen von Milch (Cappuccino) oder Abgabe von heissem Wasser ist neben dem Auslass 15 eine Dampf-/Heisswasserdüse 16 angeordnet. Die herausnehmbare Brüheinheit 18 ist nach vorne durch eine aufklappbare oder abnehmbare Abdeckhaube 17 abgedeckt. Für die Bedienung der Maschine ist eine Bedienungskonsole 12 mit den notwendigen Bedienungs- und Kontrollelementen vorgesehen. Unterhalb der Bedienungskonsole 12 ist ein nach vorne herausziehbarer Wasserbehälter 13 für die Aufbewahrung des Wasservorrates angeordnet. Links neben dem Wasserbehälter 13 befindet sich direkt unterhalb der hinter der Abdeckhaube 17 liegenden Brüheinheit 18 ein Auffangbehälter 48 für die beim Brühvorgang entstehenden, aus der Brühkammer ausgeworfenen Filterkuchen. Der Auffangbehälter 48 ist mittels einer Griffmulde 49 nach vorne herausziehbar. Er erstreckt sich mitsamt einer im hinteren Bereich angeformten Verlängerung 50 unterhalb der Brüheinheit 18 über die gesamte Länge der Brüheinheit 18. Auf diese Weise kann der Auffangbehälter 48 bei eventuellen Leckagen in der Brüheinheit 18 auch abtropfendes Wasser oder Kaffeebrühe auffangen, die dann durch Herausziehen des Auffangbehälters 48 zusammen mit den aufgefangenen Filterkuchen leicht entsorgt werden können. Hierdurch kann eine dauerhafte Verschmutzung der Kaffeemaschine 10 sicher vermieden werden.

Die Brüheinheit 18 erstreckt sich gemäss Fig. 3 und 4 entlang einer Hauptachse 48. Sie umfasst neben einer Einfüllkammer 30 und einer Brühkammer 29 einen in Richtung der Hauptachse 48 verfahrbaren Hubboden 28 und einen ebenfalls in Richtung der Hauptachse 48 verfahrbaren Presskolben 32. Aehnlich wie in der eingangs genannten Druckschrift beschrieben, fällt das gemahlene Kaffeepulver aus dem Mahlwerk 24 durch eine Einfüllöffnung 31 in die Einfüllkammer 30. Durch eine Verschiebung des Presskolbens 32 nach rechts (Fig. 3) wird das eingefüllte Kaffeepulver von der Einfüllkammer 30 in die Brühkammer 29 geschoben und dort gegen den Hubboden 28 gepresst und dadurch verdichtet. An den Stirnseiten des Presskolbens 32 und des Hubbodens 28 ist jeweils eine Siebplatte 46 bzw. 49 befestigt (Fig. 4). Durch die Siebplatte 46 wird von links in axialer Richtung heisses Wasser durch den Presskolben 32 in die Brühkammer 29 eingeführt. Durch die Siebplatte 47 tritt der aufgebrühte Kaffee aus der Brühkammer 29 durch den Hubboden 28 axial nach rechts aus und gelangt in den direkt anschliessenden Auslass 15 (Fig. 4).

Die Brüheinheit 18 ist in Längsrichtung, d.h., in Richtung der Hauptachse 48, von vorne nach hinten in die Kaffeemaschine 10 eingeschoben (Fig. 2). Zum Führen der Brüheinheit 18 beim Einschieben dient (dienen) eine (oder mehrere) stangenartige Führung(en) 19, auf deren vorderem Ende zugleich eine (lösbare) Verriegelung 20 für die Brüheinheit 18 angeordnet ist. Der Hubboden 28 und der Presskolben 32 werden z.B. durch einen Zahnstangenmechanismus, wie er in der WO-A1-93/19655 beispielhaft beschrieben ist, von einem in der Brüheinheit 18 verfahrbar angeordneten Antriebsschlitten 27 bewegt. Der Antriebsschlitten 27 kann durch einen lösbaren Einrasthaken 26 mit einem Mitnehmer 25 in Eingriff gebracht werden, der auf einer drehbaren Gewindestange 21 sitzt, die über ein Antriebsrad 22 von einem nicht gezeigten Antriebsmotor angetrieben wird. Wird die Brüheinheit 18 in die Kaffeemaschine 10 eingeschoben, fährt der Mitnehmer 25 mit dem Einrasthaken 26 soweit nach rechts, bis der Einrasthaken 26 in den Antriebsschlitten 27 eingefahren ist und dort einrastet. Der Eingriff zwischen Mitnehmer 25 und Antriebsschlitten 27 kann so immer sicher hergestellt werden, unabhängig davon, wo sich der Antriebsschlitten 27 in der Brüheinheit 18 beim Einschieben gerade befindet.

Die Gewindestange 21 ist parallel zur Führung 19 in der Kaffeemaschine 10 angeordnet und ist gegen den Druck eines Federpaketes 23 aus Tellerfedern in Achsenrichtung verschiebbar und betätigt einen (nicht dargestellten) Mikroschalter, wenn der Mitnehmer 25 auf einen Widerstand trifft. Wenn sich insbesondere durch Verdichtung des Kaffeepulvers eine Gegenkraft auf den Presskolben 32 und damit auch auf den Mitnehmer 25 aufbaut, wird bei Ueberschreiten eines vorbestimmten Wertes dieser Gegenkraft der Mikroschalter betätigt. Der Verdichtungsvorgang kann so sicher gesteuert werden.

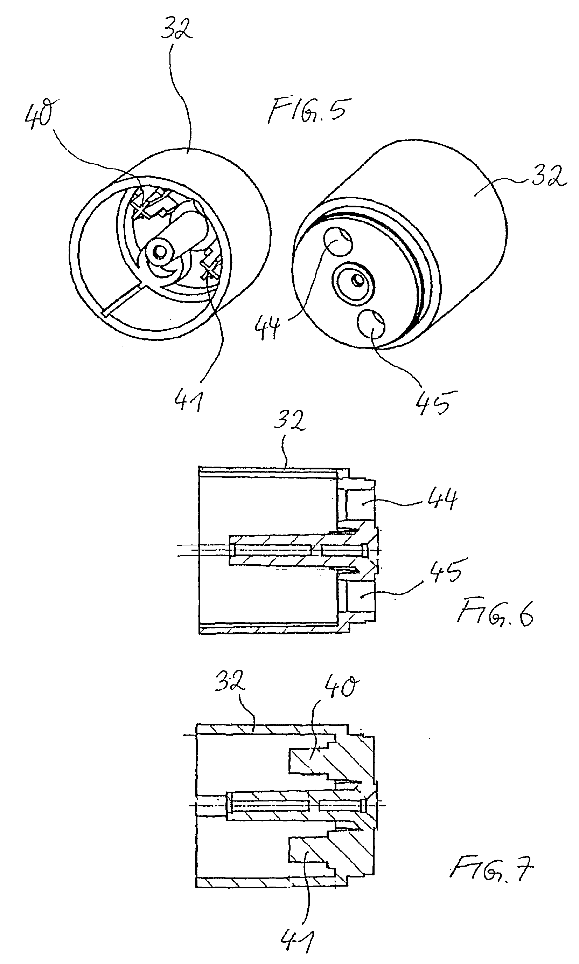

Gemäss einer bevorzugten Ausführungsform der Erfindung ist der Presskolben 32 nicht starr mit den Antriebsorganen verkoppelt, sondern ist mit einem separaten Kolbenantrieb 33, der vom Antriebsschlitten 27 angetrieben wird, über zwei Druckfedern 42, 43, verbunden. Die Druckfedern 42, 43 sitzen mit dem einen Ende auf zwei Federzapfen 40, 41 (siehe auch Fig. 5 und 7), die auf der inneren Stirnseite des Presskolbens 32 angeformt sind. Diese Federkopplung hat einen besonderen Vorteil: Wird das (trockene) Kaffeepulver verdichtet, schaltet der Antrieb bei Erreichen eines vorgegebenen Druckes ab und der Kolbenantrieb 33 und der Presskolben 32 bleiben stehen, wobei wegen des herrschenden Druckes die Druckfedern 42, 43 um einen gewissen Wert zusammengedrückt sind. Wird nun das heisse Wasser durch die Brühkammer 29 gedrückt, nimmt wegen der Befeuchtung des Kaffeepulvers die Dichte im Pulver zu und der Druck im Pulver ab. Die in den Druckfedern 42, 43, gespeicherte Kraft reicht dann aus, um den Presskolben 32 nachzuschieben und den Volumenverlust auszugleichen, so dass die Bildung von unerwünschten Wasserkanälen am Kaffeepulver vorbei sicher vermieden wird.

Die beschriebene Kopplung zwischen Presskolben 32 und Kolbenantrieb 33 über die Druckfedern 42, 43 ermöglicht die einfache Ausbildung eines Ventilmechanismus, der zum sicheren Entlasten des Druckes aus dem Druckwassersystem nach Beendigung des Brühvorgangs dient. Dazu werden im Presskolben 32 achsenparallele Ventilbohrungen 44, 45 vorgesehen (Fig. 3, 5 und 6), in die entsprechende, am Kolbenantrieb 33 angeordnete Ventilstössel 36, 37 (Fig. 3) dichtend einfahren, wenn die Druckfedern 42, 43 hinreichend stark zusammengedrückt sind. Die Abdichtung erfolgt über (nicht gezeigte) O-Ringe, die in entsprechenden Nuten 38, 39 an den Ventilstösseln 36, 37 eingesetzt sind. Einer der Ventilstössel, nämlich der Ventilstössel 36, dient zugleich als (axiale) Zuführleitung 34 für das heisse Wasser. Die Verbindung zum Heisswassersystem der Kaffeemaschine 10 wird dabei über einen flüssigkeitsdichten Steckanschluss 35 hergestellt, der beim Einstecken der Brüheinheit 18 in die Maschine betätigt wird.

Wird nach Beendigung eines Brühvorganges der Kolbenantrieb 33 mit dem Presskolben 32 zurückgefahren, entspannen sich die Druckfedern 42, 43 und die Ventilstössel 36, 37 fahren aus den Ventilbohrungen 44, 45 aus, so dass das unter Druck stehende heisse Restwasser aus der Zuführleitung 34 in den Raum zwischen Kolbenantrieb 33 und Presskolben 32 unter Entspannung austreten und von dort nach aussen abgeleitet werden kann.

### BEZUGSZEICHENLISTE

- 10: Kaffeemaschine
- 11: Einfülltrichter
- 12: Bedienungskonsole
- 13: Wasserbehälter
- 14: Stellfläche (Kaffeetasse)
- 15: Auslass
- 16: Dampf-/Heisswasserdüse
- 17: Abdeckhaube
- 18: Brüheinheit (herausnehmbar)
- 19: Führung (stangenförmig)
- 20: Verriegelung
- 21: Gewindestange
- 22: Antriebsrad
- 23: Federpaket
- 24: Mahlwerk
- 25: Mitnehmer
- 26: Einrasthaken
- 27: Antriebsschlitten
- 28: Hubboden
- 29: Brühkammer
- 30: Einfüllkammer
- 31: Einfüllöffnung
- 32: Presskolben
- 33: Kolbenantrieb
- 34: Zuführleitung
- 35: Steckanschluss
- 36, 37: Ventilstössel
- 38,39: Nut (für O-Ring)
- 40,41: Federzapfen
- 42,43: Druckfeder
- 44,45: Ventilbohrung
- 46,47: Siebplatte (Lochplatte)
- 48: Auffangbehälter (Filterkuchen)
- 49: Griffmulde (Auffangbehälter)
- 50: Verlängerung (Auffangbehälter)

## Patentansprüche

1. Kaffeemaschine (10), umfassend eine horizontal herausnehmbare Brüheinheit (18), in welcher gemahlenes Kaffeepulver entlang einer Hauptachse (48) der Brüheinheit (18) zwischen einem beweglichen Hubboden (28) und einem gegen den Hubboden (28) verfahrbaren Presskolben (32) in einer Brühkammer (29) zusammengepresst, durch das zusammengepresste Kaffeepulver unter Druck heisses Wasser gepresst und anschliessend der zurückbleibende Filterkuchen durch gemeinsames Verfahren des Hubbodens (28) und des Presskolbens (32) entlang der Hauptachse (48) aus der Brühkammer (29) herausgeschoben und quer zur Hauptachse (48) ausgeworfen wird, wobei neben der Brüheinheit weitere Funktionseinheiten wie Mahlwerk, Antriebseinheit, Wassererhitzungseinheit, Wasservorratsgefäss, Auffangbehälter für die Filterkuchen, Steuerelektronik etc. in der Maschine untergebracht sind, **dadurch gekennzeichnet, dass** die Brüheinheit (18) mit der Hauptachse (48) parallel zur Einschubrichtung horizontal von vorne nach hinten in die Kaffeemaschine (10) einschiebbar ausgebildet ist.

2. Kaffeemaschine nach Anspruch 1, **dadurch gekennzeichnet, dass** zum Führen der Brüheinheit (18) beim Einschieben in die bzw. Herausziehen aus der Kaffeemaschine (10) eine oder mehrere parallel zur Hauptachse (48) der Brüheinheit verlaufende, vorzugsweise stangenförmige, Führungen (19) vorgesehen sind.

3. Kaffeemaschine nach Anspruch 2, **dadurch gekennzeichnet, dass** am vorderen Ende der Führung (19) eine Verriegelung (20) zum Verriegeln der eingeschobenen Brüheinheit (18) vorgesehen ist.

4. Kaffeemaschine nach einem der Ansprüche 1 bis 3, **dadurch gekennzeichnet, dass** in der Brüheinheit (18) das unter Druck stehende heisse Wasser durch das in der Brühkammer (29) befindliche Kaffeepulver in Richtung der Hauptachse (48) von hinten nach vorne gepresst wird und durch einen am vorderen Ende der Brüheinheit (18) angeordneten, vorzugsweise höhenverstellbaren Auslass (15) austritt.

5. Kaffeemaschine nach Anspruch 4, **dadurch gekennzeichnet, dass** der Hubboden (28) und der Presskolben (32) an ihren der Brühkammer (29) zugewandten Stirnseiten jeweils mit einer Siebplatte (46, 47) ausgestattet sind, durch welche das heisse Wasser in die Brühkammer (29) eintritt bzw. der aufgebrühte Kaffee die Brühkammer (29) verlässt.

6. Kaffeemaschine nach einem der Ansprüche 1 bis 5, **dadurch gekennzeichnet, dass** der Antrieb des Hubbodens (28) und des Presskolbens (32) über einen in der Brüheinheit (18) in Richtung der Hauptachse (48) verschiebbar angeordneten Antriebsschlitten (27) erfolgt, welcher mit einem Mitnehmer (25) lösbar in Eingriff steht, der auf einer parallel zur Hauptachse (48) liegenden Gewindestange (21) sitzt und durch drehen der Gewindestange (21) entlang der Hauptachse (48) verfahrbar ist.

7. Kaffeemaschine nach Anspruch 6, **dadurch gekennzeichnet, dass** der lösbare Eingriff zwischen dem Mitnehmer (25) und dem Antriebsschlitten (27) durch einen Einrasthaken (26) bewirkt wird, welcher sich in Richtung der Hauptachse (48) erstreckt und um eine quer zur Hauptachse (48) liegende Schwenkachse verschwenkbar am Mitnehmer (25) angeordnet ist.

8. Kaffeemaschine nach einem der Ansprüche 6 und 7, **dadurch gekennzeichnet, dass** die Gewindestange (21) in Richtung der Hauptachse (48) gegen den Druck eines Federelements, vorzugsweise eines Federpakets (23), verschiebbar gelagert ist, und dass die Verschiebung der Gewindestange (21) gegen den Druck des Federelements bzw. Federpakets (23) um einen vorbestimmten Verschiebungsweg, wie er sich beim Auftreffen des Mitnehmers (25), des Antriebsschlittens (27) oder des Presskolbens (32) auf einen Widerstand ergibt, zum Steuern bzw. Schalten des Antriebs eingesetzt wird.

9. Kaffeemaschine nach einem der Ansprüche 1 bis 8, **dadurch gekennzeichnet, dass** der Presskolben (32) über einen in Richtung der Hauptachse (48) verschiebbaren Kolbenantrieb (33) bewegt wird, und dass der Presskolben (32) mit dem Kolbenantrieb (33) über in Richtung der Hauptachse (48) wirkende Druckfedern (42, 43) in Wirkverbindung steht.

10. Kaffeemaschine nach Anspruch 9, **dadurch gekennzeichnet, dass** das unter Druck stehende heisse Wasser durch den Presskolben (32) in die Brühkammer (29) geleitet wird, und dass am Presskolben (32) ein Ventilmechanismus (36, 37, 38, 39, 44, 45) angeordnet ist, welcher geschlossen ist, wenn der Presskolben (32) mit einem vorgegebenen Druck auf das in der Brühkammer befindliche Kaffeepulver drückt, und das unter Druck stehende Wasser entspannt und nach aussen ablässt, wenn der Druck des Presskolbens (32) auf das Kaffeepulver beseitigt wird.

11. Kaffeemaschine nach Anspruch 10, **dadurch gekennzeichnet, dass** der Ventilmechanismus am Kolbenantrieb (33) angeordnete Ventilstössel (36, 37) umfasst, welche bei ausreichendem Zusammendrücken der Druckfedern (42, 43) dichtend in entsprechende Ventilbohrungen (44, 45) im Presskolben (32) einfahren, die mit einer Zuführleitung (34) für das heisse Wasser in Verbindung stehen.

12. Kaffeemaschine nach Anspruch 11, **dadurch gekennzeichnet, dass** die Zufuhrleitung (34) für das heisse Wasser direkt durch einen der Ventilstössel (36, 37) verläuft, und dass die Ventilbohrungen (44, 45) über eine Siebplatte (46) mit der Brühkammer (29) in Verbindung stehen.

## Claims

1. Coffee machine (10) including a horizontally removable brewing unit (18) in which ground coffee powder is compacted along a main axis (48) of the brewing unit (18) between a movable base (28) and a plunger (32) that can be displaced towards the movable base (28) in a brewing chamber (29), pressurized hot water is forced through the compacted coffee powder and, the remaining filter cake is then pushed out of the brewing chamber (29) by displacement of the movable base (28) and of the plunger (32) together along the main axis (48), and is ejected transversely relative to the main axis (48), wherein, in addition to the brewing unit, further functional units such as grinder, drive unit, water-heating unit, water reservoir, filter-cake collecting container, control electronics, etc. are housed in the machine, **characterized in that** the brewing unit (18) is designed so that it can be pushed into the coffee machine (10) horizontally from the front towards the rear, with the main axis (48) parallel to the direction of insertion.

2. Coffee machine according to Claim 1, **characterized in that**, one or a plurality of, preferably bar-shaped, guides (19) which extend parallel to the main axis (48) of the brewing unit are provided for guiding the brewing unit (18) during insertion in and removal from the coffee machine (10).

3. Coffee machine according to Claim 2, **characterized in that** a catch (20) is provided at a front end of the guide (19) for locking the inserted brewing unit (18).

4. Coffee machine according to any one of Claims 1 to 3, **characterized in that**, in the brewing unit (18), the pressurized hot water is forced through the coffee powder disposed in the brewing chamber (29) in the direction of the main axis (48), forwards from the rear and leaves through an outlet (15) which is arranged at a front end of the brewing unit (18) and is preferably adjustable in height.

5. Coffee machine according to Claim 4, **characterized in that** the movable base (28) and the plunger (32) are equipped, on their surfaces facing the brewing chamber (29), with respective mesh plates (46, 47) through which the hot water enters the brewing chamber (29) and the brewed coffee leaves the brewing chamber (29), respectively.

6. Coffee machine according to any one of Claims 1 to 5, **characterized in that** the movable base (28) and the plunger (32) are driven by means of an actuating slide (28) which is arranged so as to be displaceable in the direction of the main axis (48) in the brewing unit (18) and which is releasably in engagement with a driving dog (25) which is situated on a threaded rod arranged parallel to the main axis (48) and which can be displaced along the main axis (48) by rotation of the threaded rod (21).

7. Coffee machine according to Claim 6, **characterized in that** the releasable engagement between the driving dog (25) and the actuating slide (27) is brought about by means of a latching hook (26) which extends in the direction of the main axis (48) and is arranged so as to be pivotable on the driving dog (25) about a pivot axis arranged transversely relative to the main axis (48).

8. Coffee machine according to any one of Claims 6 and 7, **characterized in that** the threaded rod (21) is mounted so as to be displaceable in the direction of the main axis (48) against the pressure of a spring element, preferably a spring assembly (23), and **in that** the displacement of the threaded rod (21) against the pressure of the spring element or spring assembly (23) for a predetermined travel, as established by the striking of the driving dog (25), of the actuating slide (27), or of the plunger (32), against a resistance, is used for the control or switching of the drive.

9. Coffee machine according to any one of Claims 1 to 8, **characterized in that** the plunger (32) is moved by means of a plunger actuator (33) displaceable in the direction of the main axis (48), and **in that** the plunger (32) is operatively connected to the plunger actuator (33) by means of compression springs (42, 43) acting in the direction of the main axis (48).

10. Coffee machine according to Claim 9, **characterized in that** the pressurized hot water is supplied into the brewing chamber (29) through the plunger (32), and **in that** a valve mechanism (36, 37, 38, 39, 44, 45) is arranged on the plunger (32), the valve mechanism (36, 37, 38, 39, 44, 45) being closed when the plunger (32) presses on the coffee powder disposed in the brewing chamber with a predetermined pressure, and relieving the pressure of the pressurized water and allowing the water to escape to the exterior when the pressure of the plunger (32) on the coffee powder is removed.

11. Coffee machine according to Claim 10, **characterized in that** the valve mechanism includes valve push-rods (36, 37) which are arranged on the plunger actuator (33) and which, upon sufficient compression of the compression springs (42, 43), sealingly enter corresponding valve bores (44, 45) in the plunger (32), which valve bores are in communication with a hot-water supply duct (34).

12. Coffee machine according to Claim 11, **characterized in that** the hot-water supply duct (34) extends directly through one of the valve push-rods (36, 37), and **in that** the valve bores (44, 45) are in communication with the brewing chamber (29) through a mesh plate (46).

## Revendications

1. Cafetière (10), comprenant une unité d'ébullition (18) horizontalement amovible, où du café moulu en poudre est tassé dans une chambre d'ébullition (29) le long de l'axe principal (48) de l'unité d'ébullition (18) entre un fond élévateur (28) mobile et un piston de compression (32) déplaçable vers le fond élévateur (28), où de l'eau chaude est mise sous pression par le café en poudre tassé avant que le gâteau de filtre résiduel soit extrait de la chambre d'ébullition (29) par déplacement conjoint du fond élévateur (28) et du piston de compression (32) le long de l'axe principal (48) et éjecté perpendiculairement à l'axe principal (48), où d'autres unités fonctionnelles sont disposées dans la cafetière en plus de l'unité d'ébullition, telles que moulin, unité d'entraînement, unité de chauffage de l'eau, réservoir d'eau, bac collecteur pour les gâteaux de filtre, électronique de commande, etc., **caractérisée en ce que** l'unité d'ébullition (18) est insérable horizontalement de l'avant vers l'arrière dans la cafetière (10) avec l'axe principal (48), parallèlement à la direction d'insertion.

2. Cafetière selon la revendication 1, **caractérisée en ce que**, pour le guidage de l'unité d'ébullition (18) lors de l'insertion dans la cafetière (10), ou du retrait hors de celle-ci, sont prévues une ou plusieurs glissières (19) préférentiellement en forme de baguette, s'étendant de préférence parallèlement à l'axe principal (48) de l'unité d'ébullition.

3. Cafetière selon la revendication 2, **caractérisée en ce qu'**un verrouillage (20) pour le blocage de l'unité d'ébullition (18) insérée est prévu à l'extrémité avant de la glissière (19).

4. Cafetière selon l'une des revendications 1 à 3, **caractérisée en ce que** l'eau chaude mise sous pression dans l'unité d'ébullition (18) est exprimée de l'arrière vers l'avant dans le sens de l'axe principal (48) par le café en poudre présent dans la chambre d'ébullition (29) et sort par une sortie (15) située à l'extrémité avant de l'unité d'ébullition (18) et préférentiellement réglable en hauteur.

5. Cafetière selon la revendication 4, **caractérisée en ce que** le fond élévateur (28) et le piston de compression (32) sont pourvus chacun d'une plaque-filtre (46, 47) sur leurs faces frontales dirigées vers la chambre d'ébullition (29), par laquelle l'eau chaude pénètre dans la chambre d'ébullition (29), et le café chaud quitte la chambre d'ébullition (29).

6. Cafetière selon l'une des revendications 1 à 5, **caractérisée en ce que** l'entraînement du fond élévateur (28) et du piston de compression (32) est réalisé par un chariot d'entraînement (27) disposé dans l'unité d'ébullition (18), mobile dans la direction de l'axe principal (48), en engrènement amovible sur un entraîneur (25) reposant sur une tige filetée (21) parallèle à l'axe principal (48) et déplaçable par rotation de la tige filetée (21) le long de l'axe principal (48).

7. Cafetière selon la revendication 6, **caractérisée en ce que** l'engrènement amovible entre l'entraîneur (25) et le chariot d'entraînement (27) est réalisé par un crochet d'enclenchement (26) s'étendant dans la direction de l'axe principal (48) et pivotant sur l'entraîneur (25) autour d'un axe de pivotement perpendiculaire à l'axe principal (48).

8. Cafetière selon l'une des revendications 6 et 7, **caractérisée en ce que** la tige filetée (21) est coulissante dans la direction de l'axe principal (48) contre la pression d'un élément à ressort, de préférence un bloc-ressort (23), et **en ce que** le coulissement de la tige filetée (21) contre la pression de l'élément à ressort ou du bloc-ressort (23) est réglé pour la commande ou la commutation de l'entraînement en fonction d'une course de coulissement définie, telle que résultant de la butée contre une résistance de l'entraîneur (25), du chariot d'entraînement (27) ou du piston de compression (32).

9. Cafetière selon l'une des revendications 1 à 8, **caractérisée en ce que** le piston de compression (32) est mû par un entraînement de piston (33) déplaçable dans la direction de l'axe principal (48), et **en ce que** le piston de compression (32) coopère avec l'entraînement de piston (33) au moyen de ressorts de pression (42, 43) agissant dans la direction de l'axe principal (48).

10. Cafetière selon la revendication 9, **caractérisée en ce que** l'eau mise sous pression est amenée par le piston de compression (32) dans la chambre d'ébullition (29), et **en ce qu'**un mécanisme de soupape (36, 37, 38, 39, 44, 45) est disposé sur le piston de compression (32), lequel est fermé quand le piston de compression (32) applique une pression définie sur le café en poudre se trouvant dans la chambre d'ébullition, et détend l'eau mise sous pression et l'évacue vers l'extérieur quand la pression du piston de compression (32) sur le café en poudre est annulée.

11. Cafetière selon la revendication 10, **caractérisée en ce que** le mécanisme de soupape comprend des poussoirs de soupape (36, 37) disposés sur l'entraînement de piston (33), rentrant dans des alésages de soupape (44, 45) correspondants du piston de compression (32) et obturant hermétiquement ceux-ci lorsque la compression des ressorts de pression (42, 43) est suffisante, lesdits alésages de soupape étant reliés à une conduite d'amenée (34) pour l'eau chaude.

12. Cafetière selon la revendication 11, **caractérisée en ce que** la conduite d'amenée (34) pour l'eau chaude passe directement au travers d'un des poussoirs de soupape (36, 37), et **en ce que** les alésages de soupape (44, 45) sont reliés par une plaque-filtre (46) à la chambre d'ébullition (29).
